# DEMANDE DE BREVET EUROPEEN

(11) **EP 0 872 327 A1**
(43) Date de publication de la demande: **21.10.1998**
(21) Numéro de dépôt: 98400890.4
(22) Date de dépôt: 10.04.1998
(51) Int. Cl.: B29C 47/12, B29C 69/00

(54) **Façonnage de joint par découpe**

(30) Priorité: 16.04.1997 FR 9704674
(71) Demandeur: STANDARD PRODUCTS INDUSTRIEL, F-95871 Bezons (FR)
(72) Inventeur: Lebouvier, Bernard, 95160 Montmorency (FR)
(74) Mandataire: Busnel, Jean-Benoît

(57) **Abrégé**

L'invention concerne un dispositif pour le façonnage en continu d'un joint d'étanchéité linéaire (J) d'axe longitudinal (X) et en défilement du type comprenant notamment des moyens de déplacement d'un organe de découpe (D) relativement au joint (J),
caractérisé en ce que lesdits moyens de déplacement sont susceptibles d'assurer conjointement une translation (T) de l'organe de découpe dans un plan transversal à l'axe longitudinal (X) du joint (J) et des rotations autour d'au moins un axe (R₁, R₂, R₃) passant par un point situé sur le fil (1) dudit organe de découpe (D).

## Description

La présente invention concerne un dispositif pour le façonnage en continu d'un joint d'étanchéité ainsi que son utilisation à la sortie d'une filière d'extrusion.

Il existe déjà des dispositifs de façonnage du type comprenant un organe de découpe déplaçable en translation relativement au joint, dans un plan transversal par rapport à l'axe longitudinal dudit joint.

Ce plan transversal est généralement incliné dans le sens du défilement du joint pour que l'organe de découpe présente un angle dit de dépouille favorisant l'éjection des copeaux de matière.

Cependant, ces dispositifs ne peuvent déplacer l'organe de découpe que dans ce seul plan transversal au flux de matière sortant de l'extrudeuse.

Dans ces conditions, les découpes obtenues ne peuvent être orientées que parallèlement à l'axe longitudinal du joint.

Or, il est parfois indispensable d'adapter le joint et en particulier sa lèvre souple à un profil et/ou à une géométrie spécifique de la feuillure de carrosserie d'un véhicule automobile de façon à parfaire l'étanchéité à l'air et à l'eau.

Cette adaptation nécessite des découpes selon des plans d'orientations diverses et variées qu'il était impossible jusqu'à présent de réaliser de façon automatique et continue avec les dispositifs de façonnage traditionnels.

La présente invention a pour but de résoudre ce problème technique de manière satisfaisante avec un dispositif permettant un façonnage évolutif automatique et continu du joint en sortie d'extrudeuse.

Ce but est atteint conformément à l'invention au moyen d'un dispositif pour le façonnage en continu d'un joint d'étanchéité linéaire d'axe longitudinal et en défilement, du type comprenant notamment des moyens de déplacement d'un organe de découpe relativement au joint,
caractérisé en ce que lesdits moyens de déplacement sont susceptibles d'assurer conjointement une translation de l'organe de découpe dans un plan transversal à l'axe longitudinal du joint et des rotations autour d'au moins un axe passant par un point situé sur le fil dudit organe de découpe.

Selon un premier mode de réalisation, l'une des rotations s'effectue autour d'un axe parallèle à l'axe longitudinal du joint de façon à obtenir un chantournement au moins partiel dudit joint.

Selon une variante, le plan transversal de la translation est incliné par rapport au plan perpendiculaire à l'axe longitudinal avec un angle de dépouille compris entre 1^{º} et 20^{º} dans le sens du défilement du joint.

Selon un second mode de réalisation, l'angle de dépouille est variable.

Selon un troisième mode de réalisation, l'une des rotations de l'organe de découpe s'effectue autour d'un axe parallèle au fil de l'organe de découpe.

Selon un quatrième mode de réalisation, l'une des rotations de l'organe de découpe s'effectue autour d'un axe perpendiculaire à l'axe longitudinal du joint.

Selon une variante particulière, les rotations s'effectuent autour de trois axes passant tous par un point commun situé sur le fil de l'organe de découpe.

Selon une caractéristique avantageuse, ledit organe de découpe est monté sur un porte-outil fixé de manière rotative sur une tête articulée sur l'extrémité d'une tige extensible.

De préférence, le porte-outil comporte au moins une nervure adaptée et destinée à coulisser dans une rainure curviligne ménagée sur ladite tête pour assurer une des rotations de l'organe de découpe.

Selon une autre caractéristique, la tige extensible est associée à un vérin.

Selon encore une autre caractéristique, ladite tête comporte des butées destinées à limiter la rotation du porte-outil.

Selon un mode de réalisation particulier, le dispositif comporte des moyens de synchronisation et d'asservissement des déplacements de l'organe de découpe en référence au défilement du joint.

Selon une variante de réalisation, l'organe de découpe est une lame.

Un autre objet de l'invention est une utilisation du dispositif ci-dessus pour le façonnage automatique et en continu d'un joint d'étanchéité linéaire à la sortie de la filière d'extrusion destinée à sa fabrication.

Le dispositif de l'invention offre une grande souplesse d'utilisation du fait que l'organe de découpe est susceptible d'être orienté dans toutes les directions par la combinaison de déplacements en translation et en rotation selon des axes perpendiculaires entre eux.

Le dispositif de l'invention permet ainsi de produire de façon automatique et continue des découpes du joint selon des plans et avec des profils complexes adaptés à toute géométrie de feuillure de carrosserie.

La mise en oeuvre du dispositif de l'invention est effectuée de préférence selon un procédé de contrôle-commande numérique, par exemple, au moyen de microprocesseurs qui pilotent le dispositif selon un programme de façonnage prédéterminé.

L'invention sera mieux comprise à la lecture de la description qui va suivre accompagnée des dessins sur lesquels :
- la figure 1 représente une vue partielle en perspective du dispositif de l'invention avec son organe de découpe dans la position initiale et dans une première position de travail ;
- la figure 2 représente une vue partielle en perspective du dispositif de la figure 1 avec son organe de découpe en position de repos ;
- la figure 3 représente une vue partielle en perspective du dispositif des figures précédentes avec son organe de découpe dans une seconde position de travail ;
- la figure 3a représente une vue partielle latérale du dispositif des figures précédentes dans la position de la figure 3 ;
- la figure 3b représente une vue partielle de dessus du dispositif des figures précédentes dans la position de la figure 3 ;
- la figure 4 représente une vue partielle en perspective du dispositif des figures précédentes avec son organe de découpe dans une troisième position de travail ;
- la figure 4a représente une vue partielle de face du dispositif des figures précédentes dans la position de la figure 4 ;
- la figure 5 représente une vue partielle en perspective du dispositif des figures précédentes avec son organe de découpe dans une quatrième position de travail ;
- la figure 5a représente une vue partielle de dessus du dispositif des figures précédentes dans la position de la figure 5 ;
- la figure 6 représente une vue de dessus de la découpe obtenue avec le dispositif des figures précédentes en utilisant différentes positions de travail de l'organe de découpe ;
- la figure 7 représente une vue schématique partielle d'un mode de réalisation du dispositif de l'invention.

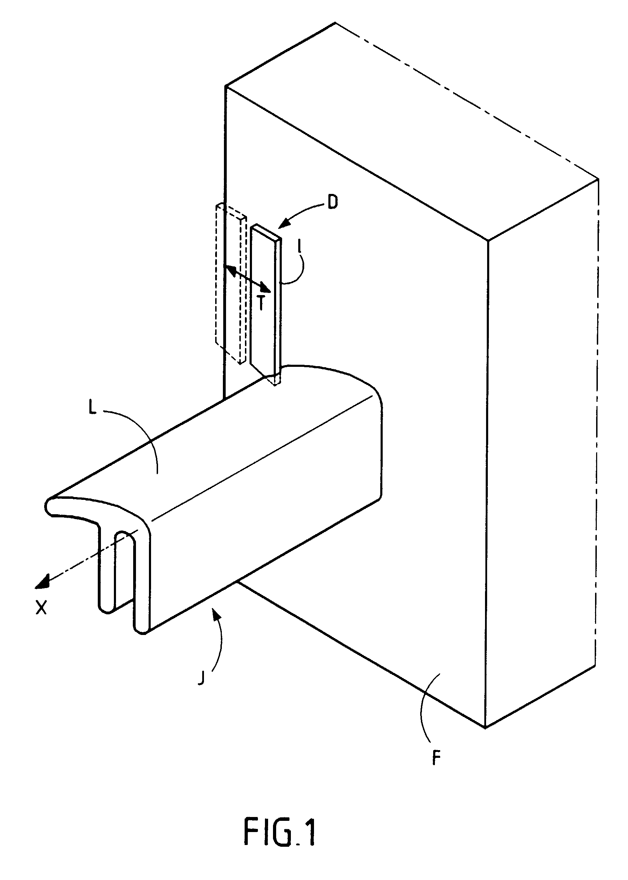

Les figures 1 à 6 représentent l'organe de découpe du dispositif de l'invention sous forme d'une lame destinée à façonner la lèvre L d'un joint d'étanchéité linéaire J.

Le joint J est réalisé en continu par extrusion de matière élastomère dans une filière F représentée ici schématiquement.

Le dispositif de l'invention comprend notamment des moyens de déplacement de l'organe de découpe D relativement au joint J.

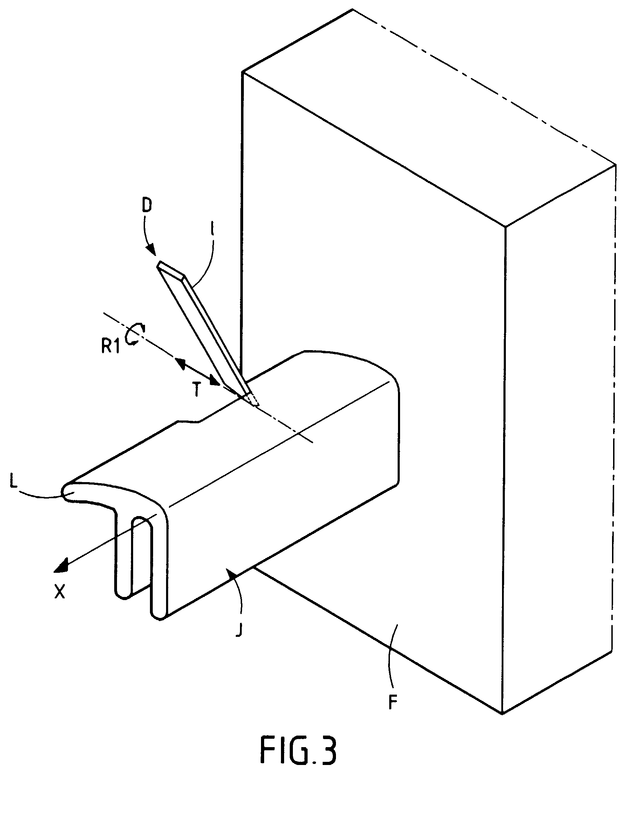

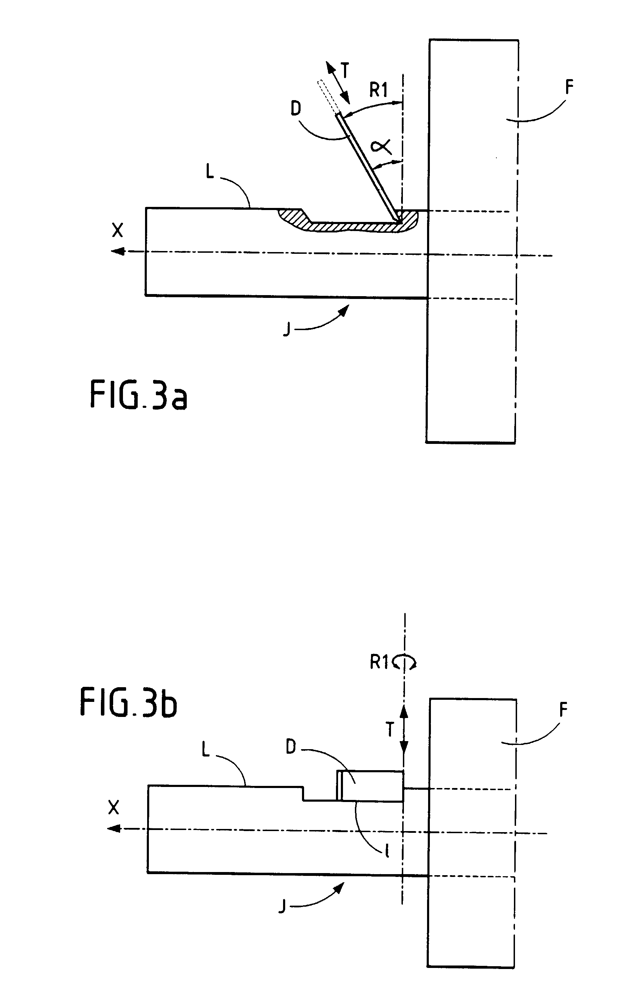

Ces moyens de déplacement sont susceptibles d'assurer une translation T de l'organe de découpe D dans un plan transversal à l'axe longitudinal X du joint J comme représenté sur la figure 1 ainsi que des rotations autour, d'au moins, un axe et de préférence trois axes distincts, et de préférence perpendiculaires entre eux, et passant tous par des points situés sur le fil 1 de la lame, comme représenté sur les figures 3, 4 et 5.

Ces points sont éventuellement distincts pour les trois axes de rotation mais peuvent aussi, selon un mode de réalisation particulier, être confondus en un même point unique commun à tous les axes.

La position en pointillés, représentée sur la figure 1, correspond à la position initiale de l'organe de découpe D tandis que la position en traits pleins correspond à une première position de travail possible dans laquelle la lame s'étend dans un plan perpendiculaire à l'axe X.

Toutefois, cette position de travail n'est pas recommandée car elle rend difficile l'éjection des copeaux de matière.

Il est donc prévu d'incliner le plan transversal contenant l'organe de découpe D par rapport au plan perpendiculaire à l'axe longitudinal X avec un angle α dit angle de dépouille.

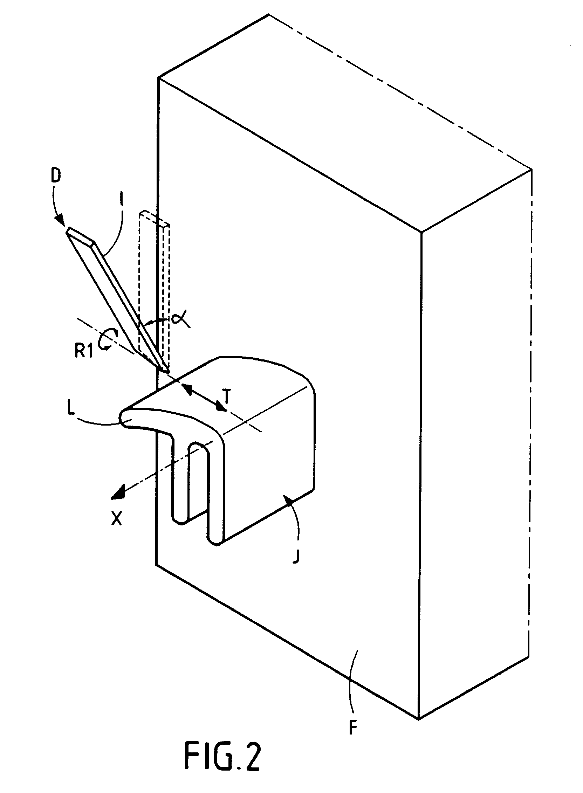

Cet angle est compris entre 1^{º} et 20^{º} et est orienté dans le sens de la sortie ou du défilement du joint J comme représenté sur la figure 2, en position de repos de l'organe de découpe D et sur les figures 3, 3a et 3b en position de travail.

Avec le dispositif de l'invention, il est possible de faire varier l'angle de dépouille pendant le façonnage par activation des moyens de déplacement de façon à assurer un pivotement ou une rotation d'angle α de l'organe de découpe D, autour d'un axe transversal R₁ passant, par exemple, par le bord inférieur de la lame et donc par l'extrémité inférieure de son fil l.

Dans le mode de réalisation représenté, l'axe R₁ est perpendiculaire à l'axe X et plus généralement au plan vertical passant par ledit axe X.

Bien entendu, la translation T peut aussi s'effectuer directement dans le plan transversal incliné d'angle α par rapport au plan perpendiculaire à l'axe X comme représenté sur la figure 3a.

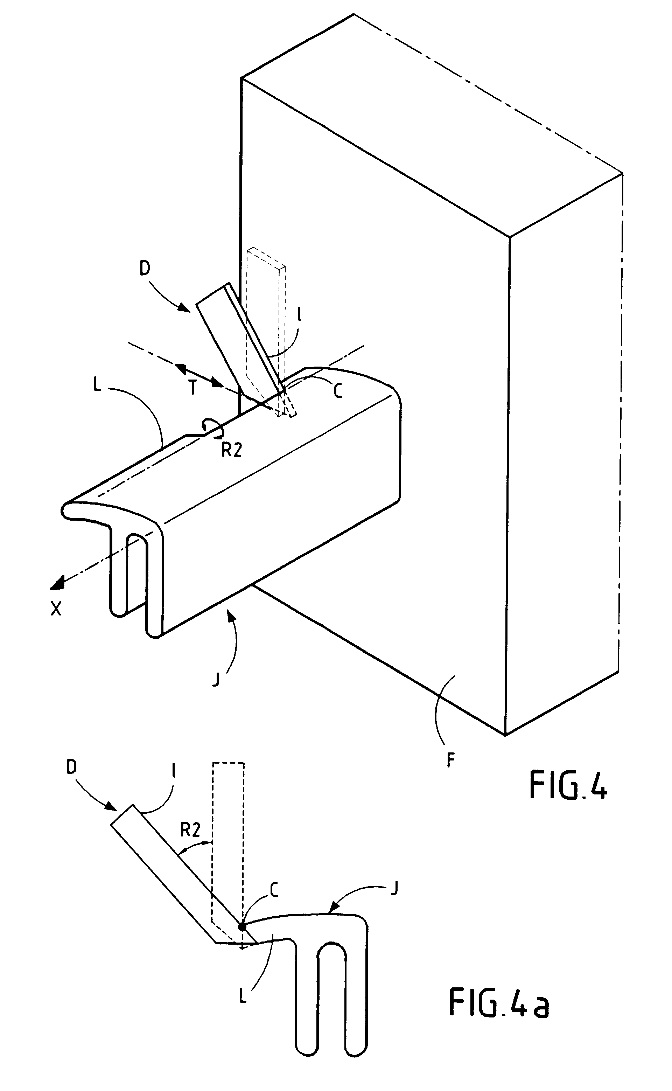

Les figures 4 et 4a représentent une troisième position de travail de l'organe de découpe D.

Cette position est obtenue par activation des moyens de déplacement, de façon à assurer une rotation de l'organe de découpe D autour d'un axe R₂ parallèle à l'axe longitudinal X. Cette rotation s'effectue donc dans un plan transversal et l'axe R₂ passe par un point C qui est situé sur le fil l de la lame et qui forme ainsi le centre de la rotation.

La position de l'organe de découpe D représentée en pointillés correspond à la première position de travail qui est représentée en traits pleins sur la figure 1.

La rotation selon R₂ permet de chantourner la lèvre L du joint J en vue de donner à sa découpe un profil complexe avec des zones curvilignes.

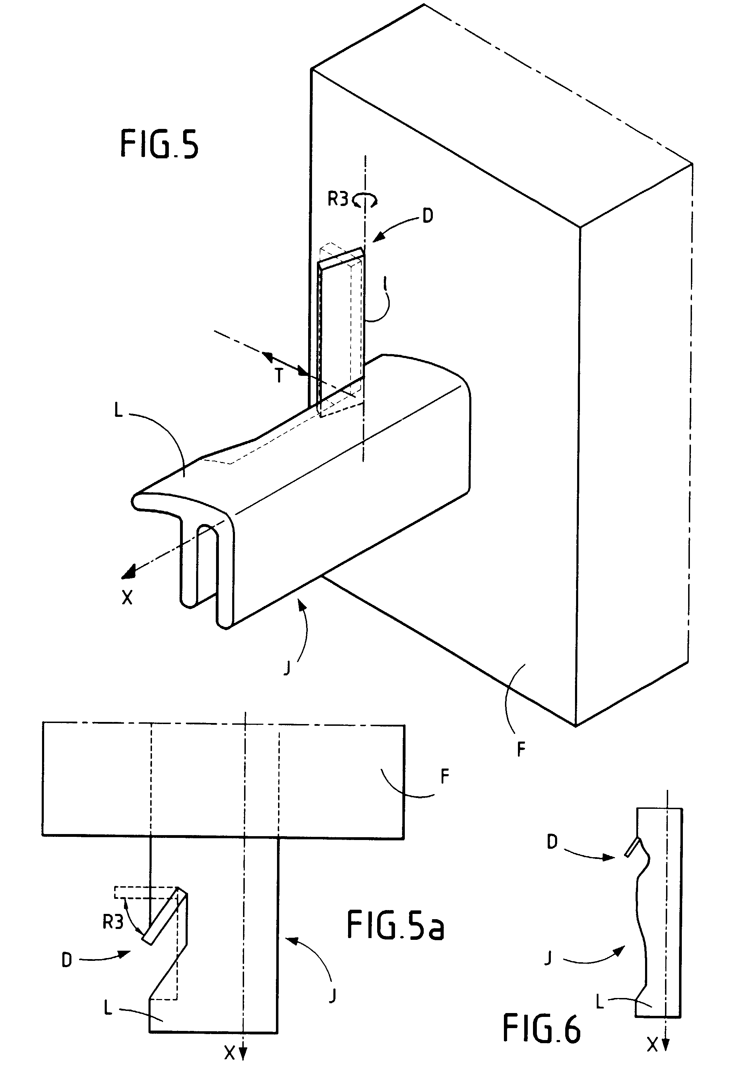

Les figures 5 et 5a représentent une quatrième position de travail de l'organe de découpe D.

Cette position est obtenue par activation des moyens de déplacement, de façon à assurer une rotation de l'organe de découpe D autour d'un axe R₃ qui est perpendiculaire au plan horizontal passant par l'axe longitudinal X du joint J et qui est donc parallèle au fil l de la lame (et ici confondu avec ledit fil).

Les moyens de déplacement permettent d'assurer conjointement, et à eux seuls, la translation T ainsi que les rotations R₁, R₂, R₃.

Les quatre mouvements de l'organe de découpe peuvent être effectués successivement ou simultanément.

A cet effet, les moyens de déplacement sont couplés à des moyens de synchronisation et d'asservissement au défilement du joint J en sortie de la filière F.

Ces mouvements de l'organe de découpe D permettent de réaliser de façon automatique un façonnage complexe et continu de la lèvre L comme représenté en vue de dessus sur la figure 6.

Le profil obtenu par combinaison de mouvements se compose de découpes rectilignes et/ou curvilignes dont les géométries sont variables selon l'axe X, ce qui permet d'obtenir un façonnage "sur mesure" de la lèvre, c'est-à-dire adapté à tous types de feuillures.

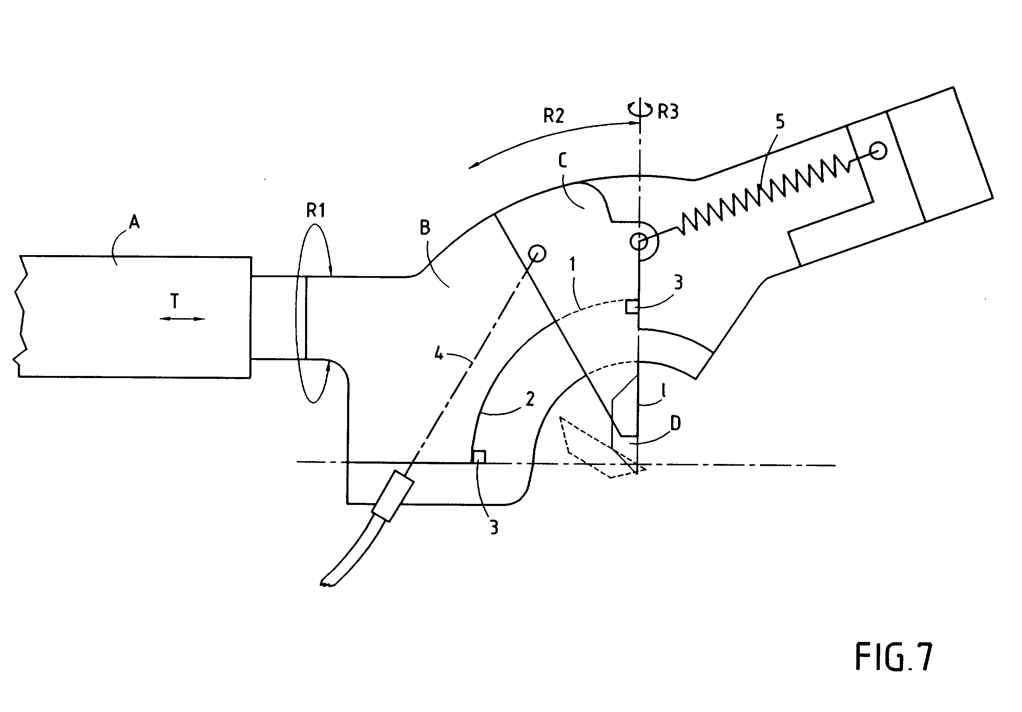

La figure 7 représente une vue partielle d'un mode de réalisation du dispositif de façonnage de l'invention.

L'organe de découpe D, ici formé d'une lame, de fil l, est monté sur un porte-outil C lui-même fixé de manière rotative sur une tête B. La tête B est articulée, par ailleurs, sur l'extrémité d'une tige extensible A pour pouvoir tourner selon l'axe R₁.

La tige A est, par exemple, portée par un vérin (non représenté) assurant la translation T.

Le porte-outil C comporte au moins une nervure 1 adaptée et destinée à coulisser dans une rainure curviligne de guidage 2 ménagée sur la tête B pour assurer la rotation de l'organe de découpe D autour de l'axe R₂ (voir figures 4 et 4a).

La tête B comporte également des butées 3 aux extrémités de la rainure 2 pour limiter la rotation du porte-outil C.

Le porte-outil C est entraîné en rotation selon R₂, par exemple, au moyen d'un câble 4 rétractable coopérant avec un ressort de rappel 5.

Bien entendu, le système d'entraînement et de guidage décrit ci-dessus peut aussi être utilisé pour effectuer les autres rotations selon R₃ et R₄ en étant disposé différemment.

Mais il est possible d'utiliser dans le cadre de l'invention d'autres technologies, toujours en vue d'assurer les déplacements de l'organe de découpe selon un régime de "tout ou rien" ou bien selon un régime contrôlé en vitesse/position.

Ainsi, on citera à titre d'exemples non limitatifs, des systèmes mécaniques (vis à bille, courroie crantée...), électromécaniques, hydrauliques, pneumatiques, des moteurs linéaires ou tout autre moyen analogue destinés à déplacer l'organe de découpe en rotation autour des divers axes R₁, R₂ , R₃.

## Revendications

1. Dispositif pour le façonnage en continu d'un joint d'étanchéité linéaire (J) d'axe longitudinal (X) et en défilement, du type comprenant notamment des moyens de déplacement d'un organe de découpe (D) relativement au joint (J),
caractérisé en ce que lesdits moyens de déplacement sont susceptibles d'assurer conjointement une translation (T) de l'organe de découpe dans un plan transversal à l'axe longitudinal (X) du joint (J) et des rotations autour d'au moins un axe (R₁, R₂, R₃) passant par un point situé sur le fil (l) dudit organe de découpe (D).

2. Dispositif selon la revendication 1, caractérisé en ce que l'une des rotations s'effectue autour d'un axe (R₂) parallèle à l'axe longitudinal (X) du joint (J) de façon à obtenir un chantournement au moins partiel dudit joint (J).

3. Dispositif selon la revendication 1 ou 2, caractérisé en ce que le plan transversal de la translation (T) est incliné par rapport au plan perpendiculaire à l'axe longitudinal (X) avec un angle de dépouille (α) compris entre 1^{º} et 20^{º} dans le sens du défilement du joint (J).

4. Dispositif selon la revendication 3, caractérisé en ce que l'angle de dépouille (α) est variable.

5. Dispositif selon l'une des revendications précédentes, caractérisé en ce que l'une des rotations de l'organe de découpe (D) s'effectue autour d'un axe (R₃) parallèle au fil (l) de l'organe de découpe (D).

6. Dispositif selon l'une des revendications précédentes, caractérisé en ce que l'une des rotations de l'organe de découpe (D) s'effectue autour d'un axe perpendiculaire (R₁) à l'axe longitudinal (X) du joint (J).

7. Dispositif selon l'une des revendications précédentes, caractérisé en ce que les rotations s'effectuent autour de trois axes (R₁, R₂, R₃) passant tous par un point commun (C) situé sur le fil (l) de l'organe de découpe (D).

8. Dispositif selon l'une des revendications précédentes, caractérisé en ce que ledit organe de découpe (D) est monté sur un porte-outil (C) fixé de manière rotative sur une tête (B) articulée sur l'extrémité d'une tige extensible (A).

9. Dispositif selon la revendication 8, caractérisé en ce que le porte-outil (C) comporte, au moins, une nervure (1) adaptée et destinée à coulisser dans une rainure curviligne (2) ménagée sur ladite tête (B) pour assurer des rotations de l'organe de découpe (D).

10. Dispositif selon la revendication 8 ou 9, caractérisé en ce que la tige extensible (A) est associée à un vérin.

11. Dispositif selon l'une des revendications 8 à 10, caractérisé en ce que ladite tête (B) comporte des butées (3) destinées à limiter la rotation du porte-outil (C).

12. Dispositif selon l'une des revendications précédentes, caractérisé en ce qu'il comporte des moyens de synchronisation et d'asservissement des déplacements de l'organe de découpe (D) en référence au défilement du joint (J).

13. Dispositif selon l'une des revendications précédentes, caractérisé en ce que l'organe de découpe (D) est une lame.

14. Utilisation du dispositif selon l'une des revendications 1 à 13 pour le façonnage automatique et en continu d'un joint d'étanchéité (J) linéaire à la sortie de la filière d'extrusion (F) destinée à la fabrication dudit joint (J).
